# EUROPEAN PATENT APPLICATION

(11) **EP 2 843 909 A1**
(43) Date of publication of application: **04.03.2015**
(21) Application number: 14177764.9
(22) Date of filing: 21.07.2014
(51) Int. Cl.: H04L 29/08, H04W 8/00

(54) **Information processing apparatus, method for controlling the same and computer program**

(30) Priority: 13.08.2013 JP 2013168339
(71) Applicant: Canon Kabushiki Kaisha, Tokyo 146-8501 (JP)
(72) Inventor: Tokunaga, Koshi, Tokyo, Tokyo 146-8501 (JP)
(74) Representative: TBK

(57) **Abstract**

The present invention relates to a method for discovering a device to communicate with among communication devices on a network. If a first device (100) is discovered on a first network, it is inquired of a device (200b) on a second network whether or not the discovered first device is a device having an effective association with that device. As the result of the inquiry, if it is determined that the discovered first device is a device having an effective association with that device, data is obtained from the discovered first device (100). On the other hand, if it is determined that the discovered first device is not the device having an effective association with that device, the data is not obtained from the discovered first device.

## Description

### BACKGROUND OF THE INVENTION

### Field of the Invention

The present invention relates to an information processing apparatus, a method for controlling the same, and a computer program.

### Description of the Related Art

Digital cameras and digital video cameras that have a wireless communication function are known (Japanese Patent Laid-Open No. 2003-319309). Such digital cameras and digital video cameras can connect to a network using the wireless communication function, and can upload captured image data to an external apparatus on the network.

For communication with the external apparatus on the network, it is at first necessary to identify a communication counterpart. Therefore, search for devices present on the network may be considered to be conducted, but it is cumbersome if all devices having a specific service on the network are detected by the search.

### SUMMARY OF THE INVENTION

The present invention provides an information processing apparatus that can efficiently discover, among communication devices that are present on a network, a device to communicate with and a method for controlling the same.

The present invention in its first aspect provides an information processing apparatus as specified in claims 1 to 10.

The present invention in its second aspect provides a method for controlling an information processing apparatus as specified in claim 11.

The present invention in its third aspect provides a computer program as specified in claim 12.

Further features of the present invention will become apparent from the following description of exemplary embodiments with reference to the attached drawings.

### BRIEF DESCRIPTION OF THE DRAWINGS

FIG. 1 is a block diagram illustrating an example of a functional configuration of a digital camera as an example of a communication apparatus according to embodiments.
FIG. 2 is a block diagram illustrating an example of a functional configuration of a personal computer capable of realizing an information processing apparatus according to embodiments.
FIGS. 3A and 3B are diagrams schematically illustrating connection topology of a digital camera, a PC, and a server according to a first embodiment.
FIGS. 4A and 4B are diagrams illustrating examples of pairing information of the first embodiment.
FIG. 5 is an operational sequence diagram of the digital camera, the PC, and the server in discovery processing according to the first embodiment.
FIG. 6 is a flowchart illustrating an operation of the digital camera in the discovery processing of the first embodiment.
FIG. 7 is a flowchart illustrating an operation of the PC in the discovery processing of the first embodiment.
FIGS. 8A to 8D are diagrams illustrating examples of device information on the digital camera and the PC.
FIG. 9 is an operational sequence diagram of a digital camera, a PC, and a server in discovery processing according to a second embodiment.
FIG. 10 is a flowchart illustrating an operation of the digital camera in the discovery processing of the second embodiment.
FIG. 11 is a flowchart illustrating an operation of the PC in the discovery processing of the first embodiment.

### DESCRIPTION OF THE EMBODIMENTS

Exemplary embodiments of the present invention will now be described in detail in accordance with the accompanying drawings. Note that embodiments that will be described below are merely examples for realizing the present invention, and may suitably be modified or changed according to a specific configuration or various types of conditions of an apparatus to which the present invention is applied. Furthermore, it is also possible to suitably combine the embodiments.

### First Embodiment

### <Digital Camera Configuration>

The following will describe a digital camera having a wireless communication function, as an example of a communication apparatus that transfers data. Note that the present invention is applicable to any apparatus that has a wireless communication function and can transfer data. Examples of such a terminal include a mobile phone, a personal computer, a tablet terminal, a game console, and the like, but the terminal may be another device.

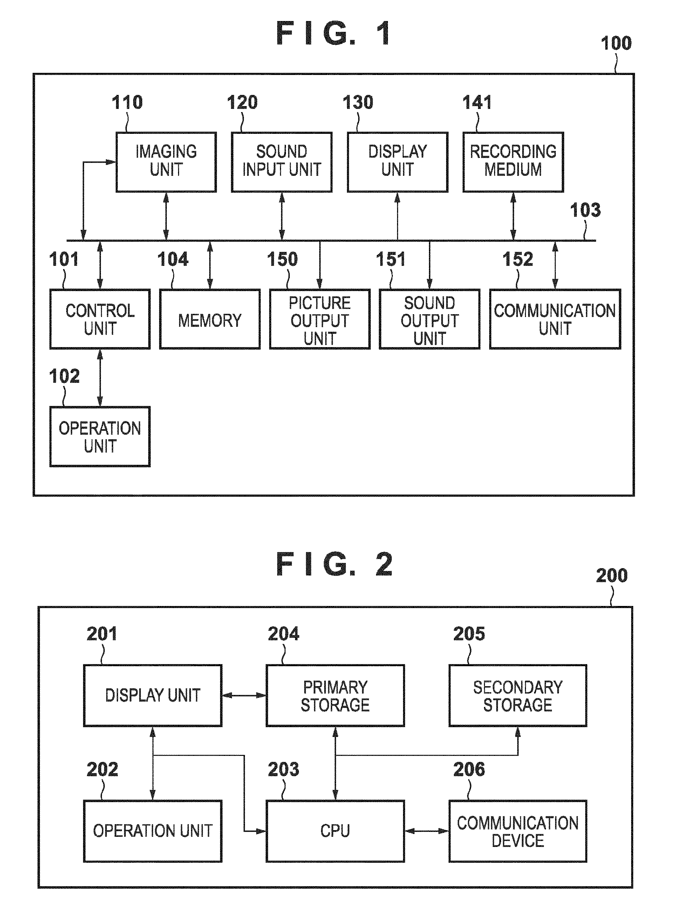

FIG. 1 is a block diagram illustrating an example of a functional configuration of a digital camera 100 according to the present embodiment. A control unit 101 is constituted by, for example, a CPU (MPU), a memory (DRAM, SRAM) and the like, and executes various types of processing (programs) to control blocks of the digital camera 100 and to control data transmission between the blocks. The control unit 101 performs the control of the blocks of the digital camera 100 in accordance with an operation signal from an operation unit 102 that receives an operation of a user.

The operation unit 102 is constituted by, for example, switches to which various types of shooting-related operations are input, such as a power button, a zoom adjustment button, and an autofocus button. The operation unit 102 may further include a menu display button, a select button, and cursor keys, a pointing device, a touch panel, or the like, and transmits an operation signal to the control unit 101 when any of these keys and buttons is operated by the user. Furthermore, the operation unit 102 includes a release button, and the release button includes a switch (SW1) that is pressed in a so-called "half way" manner and a switch (SW2) that is pressed in a so-called "all the way" manner. A shooting preparation instruction is given when the SW1 has been pressed, and a shooting instruction is given when the SW2 has been pressed. A shooting preparation operation includes autofocus detection (AF), automatic exposure control (AE), and the like. Note that, in the present embodiment, one release button is used both for still image shooting and moving image shooting, but separate buttons may be used.

A bus 103 is a general-purpose bus for transmitting various types of data, control signals, instruction signals, and the like to the blocks of the digital camera 100.

An imaging unit 110 controls, using a diaphragm, the light amount of an optical image of an object that was captured by an imaging lens, and converts the optical image into an image signal using an imaging device such as a CCD image sensor or a CMOS image sensor.

Furthermore, a sound input unit 120 collects sound in the vicinity of the digital camera 100 using, for example, a built-in omnidirectional microphone, an external microphone connected via a sound input terminal, or the like.

A memory 104 is a Random Access Memory (RAM) or a rewritable nonvolatile memory, and temporarily stores image and sound signals, setting information of the digital camera 100, and the like.

A recording medium 141 is a recording medium connectable to the digital camera 100. The recording medium 141 can record various types of data generated by the digital camera 100. Examples of the recording medium 141 include a hard disk, an optical disk, and rewritable nonvolatile semiconductor memory, and the like. In the present embodiment, a rewritable nonvolatile semiconductor memory device that is referred to as a so-called memory card and can be installed on the digital camera 100 is used as the recording medium 141.

A picture output unit 150 is constituted by a picture output terminal for example, and transmits an image signal to a connected external display unit or the like so that it displays a picture. The picture output unit 150 and a sound output unit 151, which will be described later, may also be a single integrated terminal, such as for example an HDMI (registered trademark) terminal.

The sound output unit 151 is constituted by, for example, a sound output terminal, and transmits sound signals to a connected earphone, speaker, or the like so that it outputs sound. Also, the sound output unit 151 may be built in the digital camera 100.

A communication unit 152 performs data transmission and reception to and from an external device with wired or wireless serial or parallel communication. Examples of a communication interface that can be used by the communication unit 152 include RS232C, USB, IEEE1394, P1284, SCSI, modem, LAN, IEEE802.11x, and the like. The communication unit 152 may perform data transmission and reception to and from an external device by executing a communication protocol according to the communication interface. Examples of the communication protocol include a Hyper Text Transfer Protocol (HTTP), a Picture Transfer Protocol over IP (PTP-IP), and the like. The communication interfaces and communication protocols exemplified here are well-known, and therefore detailed descriptions thereof are omitted. Note that it is also possible that the recording medium 141 has the function of the communication unit 152.

A display unit 130 displays image data recorded on the recording medium 141, and a GUI such as various types of menus. The display unit 130 may be, for example, a liquid crystal display, an organic EL display, or the like.

### <Personal Computer (PC) Configuration>

The following will describe a personal computer (PC) into which still images and moving images can be imported, as an example of an information processing apparatus that can realize a user terminal and a server according to the embodiments of the present invention. Note that a tablet-type PC and a smartphone are also examples of the information processing apparatus.

FIG. 2 is a block diagram illustrating an example of a functional configuration of a PC 200 according to the present embodiment.

The PC 200 includes a display unit 201, an operation unit 202, a CPU 203, a primary storage 204, a secondary storage 205, and a communication device 206.

Basic functions of the constituent components are the same as those of the digital camera 100, and therefore detailed descriptions thereof are here omitted. The display unit 201 may be a liquid crystal display, an organic EL display, or the like. Also, the display unit 201 is not necessarily provided on the PC 200, and it is sufficient that the PC 200 has a display control function to control display of the display unit 201. The primary storage 204 is, for example, a Random Access Memory (RAM) or a rewritable nonvolatile memory, is configured to store setting values of the PC and to store and expand a program that is executed by the CPU 203, and is used as a working area or the like for the CPU 203. The secondary storage 205 is a magnetic recording device such as an HDD or a magnetic tape drive, a storage device using an optical or magneto-optical medium such as DVD, CD, BD, or MO, or a storage device using a nonvolatile semiconductor memory such as SSD. The secondary storage 205 is used for storing various types of applications (including OS), user data, and the like.

The CPU 203 executes a program (such as an OS or an application) expanded on the primary storage 204, and controls the blocks of the PC 200. The CPU 203 performs the control of the blocks in accordance with an operation signal from the operation unit 202 that receives an operation of a user. Typically, a keyboard and a mouse, or a touch panel, for example, is used as the operation unit 202, but the present invention is not limited to these.

The communication device 206, similar to the communication unit 152 of the digital camera 100, communicates data with an external device using a communication interface and a communication protocol that conform to a predetermined standard. Note that the communication unit 152 and the communication device 206 have multiple types of communication interfaces, and can perform communication using a communication protocol according to the communication interface. In the present embodiment, the communication device 206 is configured to be communicable with both a device on a local area network (LAN) and a device on a wide area network (WAN) such as the Internet. Note that the LAN and the WAN are examples of two different networks, and it is sufficient that the communication device 206 is connectable to both a first network to which a data transmitting device is accessible and a second network in which there is a server for providing a data transfer service.

Note that although the server and the user terminal according to the embodiments can both be realized by the personal computer shown in FIG. 2, in the following description, "PC" is used as a member meaning the user terminal and a PC that functions as the server is referred to as "server", for the sake of convenience.

### <Summary of Connection Topology>

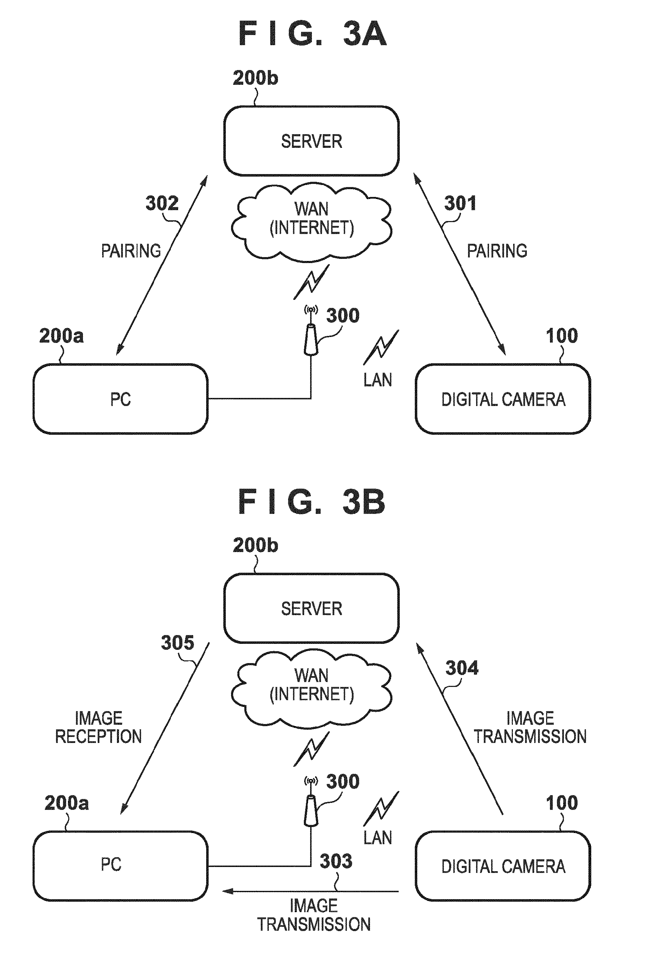

FIGS. 3A and 3B are diagrams schematically illustrating connection topology of the digital camera 100, a PC 200a, and a server 200b according to the present embodiment.

FIG. 3A is a schematic diagram illustrating processing of communication 301 and 302 for respectively performing pairing processing between the server 200b and the digital camera 100 and pairing processing between the server 200b and the PC 200a. The digital camera 100 and the PC 200a wiredly or wirelessly connect to a local area network (LAN) constructed by a router 300, and connect to a wide area network (WAN) such as the Internet via the router 300, enabling communication with the server 200b on the WAN.

The router 300 provides a function to construct a network, and a routing function to relay communication between devices such as a portable device and a PC that are connected to the constructed network. The router 300 operates in conformity to the Internet protocol suite, and constructs a LAN in which the IP address of the router 300 is a gateway address. Furthermore, the router 300 has at least one of a wired interface and a wireless interface. The wired connection may be, for example, physical connection between the router and the device via a LAN cable, and the wireless connection may be, for example, wireless connection conforming to IEEE802.11x (where x is a, b, g, n, ac, etc.). The router 300 of the present embodiment has a wired interface and a wireless interface, as shown in the figure.

When the router 300 has a wireless interface, an SSID and an encryption key are set, and a device that wants to connect to the router 300 establishes wireless connection to the router 300 by being authenticated by the router 300 using the SSID and the encryption key set for the router 300. When a device such as a portable device or a PC is connected to the LAN of the router 300 wiredly or wirelessly, the router 300 will assign an IP address to the connected device. A representative protocol for automatically assigning an IP address is, for example, a Dynamic Host Configuration Protocol (DHCP). The router 300 also analyzes a protocol and an IP address of data that is transmitted on the LAN when the devices on the LAN communicate with each other, and determines which path is used to transfer data.

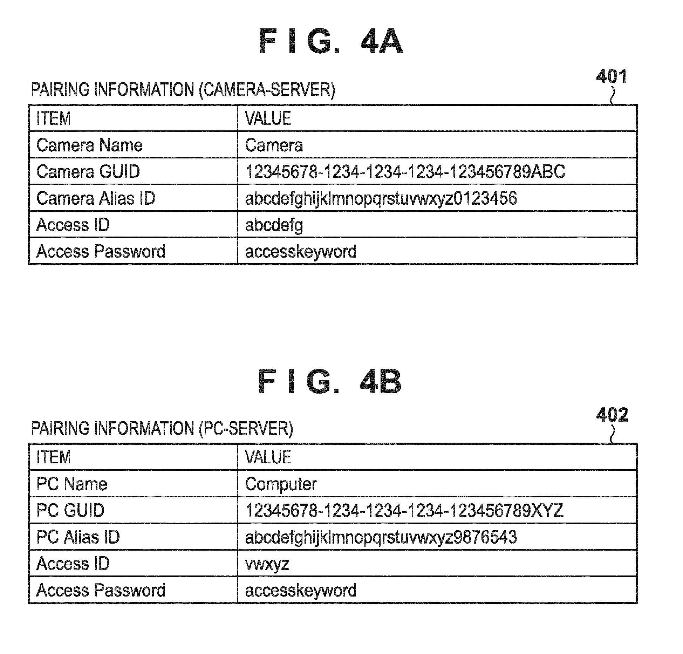

In pairing processing between the server 200b and the digital camera 100 via the communication 301, the user creates a user account in order to use a service provided by the server 200b. Pairing between the server 200b and the digital camera 100 is realized by the digital camera 100 being registered for the user account created in the server 200b. The pairing processing is realized specifically with the following procedures. The digital camera 100 transmits device information on the digital camera 100 to the server 200b. The device information on the digital camera 100 that is transmitted is information shown in FIG. 4A for example, and is stored in advance in the memory 104. Specifically, the device information includes "Camera Name", which is a model name of the digital camera 100, "Camera GUID (Global Unique Identifier)", which is individual information for uniquely identifying the digital camera 100, and the like. Besides GUID, another information such as UUID may be used as the individual information.

Upon receipt of information on the digital camera 100, the server 200b creates "Alias ID" specific to the digital camera 100. The server 200b further creates "Access ID" and "Access password" for use in processing for authenticating access of the digital camera 100 to the server 200b. Then, the server 200b transmits these pieces of information to the digital camera 100. The digital camera 100 stores the received Alias ID, Access ID, and Access password in a nonvolatile area of the memory 104 in order then to use them when accessing the server 200b.

The server 200b stores, in the secondary storage 205, the information on pairing with the digital camera 100 shown in FIG. 4A. "Camera Alias ID" is a specific information with which the digital camera 100 can uniquely be identified and that is created by the server 200b in association with the user account and the information on the digital camera 100. Therefore, upon receipt of "Camera Alias ID" from the digital camera 100, the server 200b can uniquely identify the digital camera that is a communication sender. With the above-described procedures, pairing processing between the server 200b and the digital camera 100 is completed.

Then, in the communication 302 between the server 200b and the PC 200a, the user launches a transfer service application stored in the secondary storage 205 of the PC 200a, and logs in the server 200b using the user account created in the communication 301. Although the login method is not limited, the user may use a method for accessing a URL of the server 200b using, for example, a browsing function of the transfer service application launched on the PC 200a, and inputting a user ID and a password to a displayed login screen. When the user has successfully logged in, and has given an instruction regarding PC registration from, for example, a service menu screen that is displayed on the transfer service application, the server 200b obtains information on the PC 200a via the transfer service application.

Here, the information that is transmitted from the PC 200a is "PC Name", which is a PC name of the PC 200a that is stored in advance in the secondary storage 205, "PC GUID", which is individual information for uniquely identifying the PC 200a, or the like. It is sufficient that "PC GUID" is information that can uniquely identify the PC 200a. For example, "PC GUID" may be hardware information such as a serial number of the PC 200a or a MAC address of a Network Interface Card (NIC), or a character string created by the transfer service application.

Upon receipt of the device information from the PC 200a, the server 200b creates "PC alias ID", which is an identifier for the server 200b managing the PC 200a, and "Access ID" and "Access password" for use in authentication processing at the time of access to the server, stores them in the secondary storage 205, and transmits them to the PC 200a. Note that the server 200b stores, in the secondary storage 205, the information on pairing with the PC 200b shown in FIG. 4B. "PC alias ID" is a specific information with which the PC 200a can uniquely be identified and that is created by the server 200b in association with the user account and the device information on the PC 200a. Therefore, upon receipt of "PC alias ID" from the PC 200a, the server 200b can uniquely identify the PC that is a communication sender. With the above-described procedures, pairing processing between the server 200b and the PC 200a is completed.

With the above-described procedures, respective of the pairing processing between the server 200b and the digital camera 100 and pairing processing between the server 200b and the PC 200a are completed. With the pairing processing, both of the digital camera 100 and the PC 200a are associated with the same user account in the server 200b, and are managed by the server 200b as devices associated with the same user. As a result, it is possible to transmit an image file from the digital camera 100 to the PC 200a.

FIG. 3B shows two types of paths through which image data is transmitted to the PC 200a from the digital camera 100. In the present embodiment, the paths through which image data is transmitted to the PC 200a from the digital camera 100 via the server 200b are namely a path via the server 200b (via-server transfer) and a path not via the server 200b (direct transfer). "Via-server transfer" is denoted by communication 304 and 305, and "direct transfer" is denoted by communication 303.

In the control unit 101 and/or the memory 104 of the digital camera 100 of the present embodiment, a program for enabling communication with the PC 200a according to a discovery protocol for performing device search on a network is installed. In this context, the discovery protocol is a protocol for enabling communication conforming to specifications of Universal Plug and Play (UPnP) and Bonjour, but the present invention is not limited to this. Therefore, a command for executing communication using UPnP and Bonjour, device information that is specific to the digital camera 100 and necessary for communication using UPnP and Bonjour, and the like are registered in the digital camera 100.

Furthermore, also in the secondary storage 205 of the PC 200a of the present embodiment, a program for enabling communication with the digital camera 100 in conformity to the specifications of UPnP and Bonjour, is installed. Therefore, a command for executing communication using UPnP and Bonjour, device information that is specific to the PC and necessary for communication using UPnP and Bonjour, and the like are registered in the PC 200a.

Moreover, in the control unit 101 and/or the memory 104 of the digital camera 100 of the present embodiment, a program for enabling communication with the PC 200 in conformity to an HTTP serving as a protocol for transferring an image is installed. This program has two functions, namely the function of an HTTP client to transmit a request to an HTTP server and the function of an HTTP server to receive a request from an HTTP client to execute processing according to the request. Moreover, in the secondary storage 205 of the PC 200a of the present embodiment, a program for enabling communication with the digital camera 100 in conformity to an HTTP is installed, and this program has the function of the HTTP client to transmit a request to the HTTP server.

Furthermore, an image file is stored in advance in the recording medium 141 of the digital camera 100 and in the secondary storage 205 of the PC 200a of the present embodiment. Image file transmission processing according to the present embodiment is realized such that the digital camera 100 and the PC 200a are connected to each other via a network, and an image file supplied from the digital camera 100 is stored in an arbitrary directory of the secondary storage 205 of the PC 200a.

The present embodiment is described in detail by taking as an example a configuration in which the digital camera 100 connects to the PC 200a using UPnP and Bonjour, which are discovery protocols, and an image file is transmitted to the PC 200a using PTP-IP. "PTP-IP" is an abbreviation for Picture Transfer Protocol over TCP/IP networks. Note that the present invention is not limited to specific discovery protocols and transfer protocols that are described here, and is also applicable to communication using another protocol. For example, "Jini" of Sun Microsystems Corp. may be used as another discovery protocol.

Here, Universal Plug and Play (UPnP) and Bonjour, which are discovery protocols used in the present embodiment, will be described. "UPnP" is a technical specification for connecting devices selected from among a home PC, a peripheral device, an AV device, a telephone, and an appliance via a network and for allowing the devices to mutually provide functions. While, Bonjour is a technique for automatically detecting devices on an IP network, for example, a wireless LAN such as the Ethernet (registered trademark) or the 802.11 series, and for connecting the detected devices. In Bonjour, communication that does not involve a router is determined as a local network, and an IP address is automatically obtained. Furthermore, naming is performed using a multicast DNS in which a local host name is not necessarily set. Furthermore, service search for searching for a device having a function desired to be used is conducted. The specifications of these protocols are publicly known, and therefore detailed descriptions thereof are omitted.

The communication 303 in FIG. 3B denotes the path (direct transfer) through which an image file of the digital camera 100 is directly transmitted to the PC 200a. Here, after completion of processing for pairing with the server 200b, the transfer service application operating on the PC 200a searches for devices on the LAN constructed by the router 300 at regular intervals, and responds to a device information obtainment request from a connected device, if any. Note that, in the following, an operation realized by the CPU 203 executing a program may be described in a subjective view of the PC 200a. Similarly, an operation realized by the control unit 101 of the digital camera 100 executing a program may be described in a subjective view of the digital camera 100.

Upon an instruction from a user to execute processing for transmitting an image file to the PC 200a via the operation unit 102, the control unit 101 of the digital camera 100 that executes the above-described program connects, via the communication unit 152, to the local area network that is constructed by the router 300. Then, the digital camera 100 searches devices in the local area network and confirms whether or not there is the PC 200a. When, as a result of the search, the digital camera 100 and the PC 200a discover each other, the digital camera 100 executes the function of the HTTP server to prepare for providing the image file to the outside, and waits for an obtainment request from an HTTP client. The PC 200a executes the function of the HTTP client to transmit an image file obtainment request to the digital camera 100, and obtains an image file directly from the digital camera 100 via the communication 303.

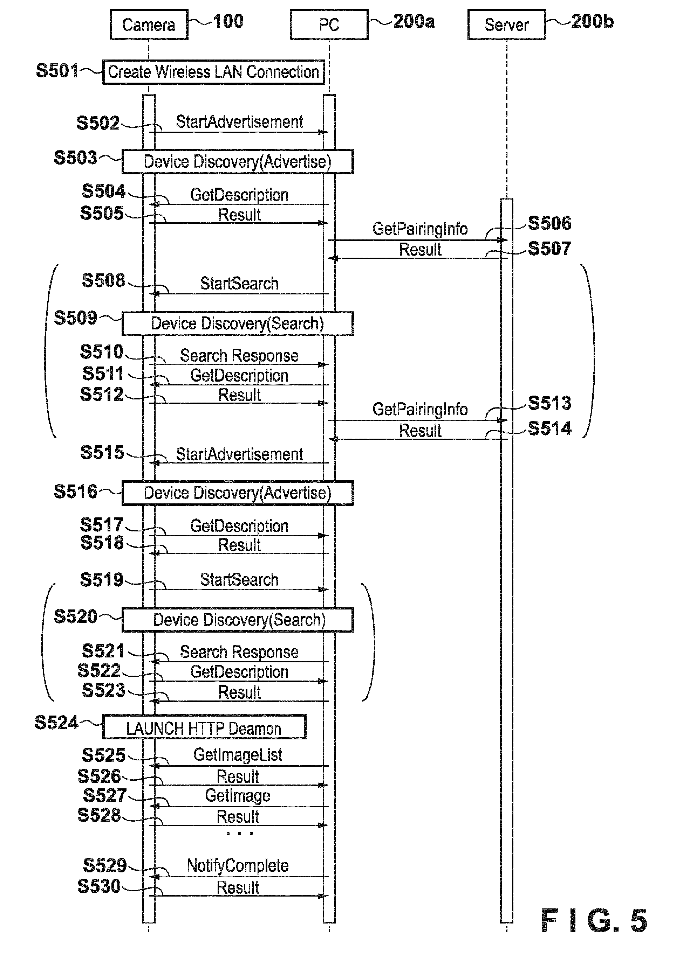

Note that, in the present embodiment, the digital camera 100 and the PC 200a perform data transmission and reception conforming to an HTTP. "HTTP server" refers to software or a computer that has a function to transmit information in the World Wide Web (WWW) system. An HTTP server holds contents, and transmits a content file to an HTTP client in accordance with an HTTP method request, such as Get, Post, or Head, from an HTTP client. Furthermore, "HTTP client" refers to software or a computer that transmits a request to an HTTP server using the HTTP method. "Image obtainment request" of the present embodiment refers to an HTTP method request, and "content" refers to an image file. Note that processing for searching the digital camera 100 and the PC 200a when an image file is transmitted via the communication 303 will be described in detail later with reference to FIGS. 5 to 8D.

In FIG. 3B, the paths through which an image file of the digital camera 100 is transmitted to the PC 200a via the server 200b are realized by the communication 304 and 305.

The digital camera 100 searches devices in the local area network of the router 300 and, when having determined that there is not the PC 200a, the digital camera 100 executes the function of an HTTP client and transmits an image file to the server 200b via the communication 304. The file transmission to the HTTP server from the HTTP client may be realized using, for example, a Post method. The transmitted image file is temporarily stored in the secondary storage 205 of the server 200b. The PC 200a accesses, as an HTTP client, the server 200b at regular intervals for example, and confirms whether or not an image file is temporarily stored in the server 200b. If it is determined that an image file is stored, the PC 200a obtains the image file from the server 200b via the communication 305. The obtainment of an image file from the HTTP server may be performed by using, for example, a Get method. This is the overview of the image file transfer procedures of the present embodiment.

### <Discovery Sequence>

The following will describe in detail the device search (discovery) processing of the digital camera 100, the PC 200a, and the server 200b that is executed in order to transmit (directly transferring) an image file stored in the recording medium 141 of the digital camera 100 to the PC 200a via the communication 303.

FIG. 5 is an operational sequence diagram of the digital camera 100, the PC 200a, and the server 200b in the discovery processing according to the present embodiment. This sequence starts in response to detection by the control unit 101 that a power button or a play button included in the operation unit 102 of the digital camera 100 was pressed.

First, in step S501, the control unit 101 of the digital camera 100 connects to a local area network constructed by the router 300. For example, the control unit 101 displays on the display unit 130 a Graphical User Interface (GUI) that receives inputs of information necessary for connection to the network. Specifically, the control unit 101 displays, on the display unit 130, a GUI including text boxes in which a Service Set Identifier (SSID) and an encryption key are input that are necessary for wireless connection to the router 300 that constructs the LAN.

Note that "SSID" refers to an identifier of an access point in the IEEE802.11x series wireless LAN, and a name that is assigned to prevent cross talk. Furthermore, "encryption key" refers to a key that encrypts communication contents in order to prevent unauthorized access to an SSID. The user inputs an SSID and an encryption key by operating, for example, a software keyboard displayed on the display unit 130 using the operation unit 102. Other input methods, such as a method using hardware keys or a sound input method, may of course be used, and it is also possible to store the SSID and the encryption key of an access point that has once connected and to select only the SSID from next time onwards.

The control unit 101 temporarily stores an SSID and an encryption key that were input or read out in the memory 104, and establishes wireless connection with the router 300. When the wireless connection with the router 300 has been established, the router 300 assigns an IP address to the digital camera 100. The control unit 101 stores the assigned IP address in the memory 104. With this, connection to the local area network (step S501) is completed.

Hereinafter, discovery sequence will be described. The flow of typical discovery processing is such that, when a first device has confirmed the existence of a second device of a desired type on the network, the first device advertises its existence on the network. However, in the present embodiment, even when a first device has confirmed the existence of a second device of a desired type on the LAN, the first device does not perform the advertisement processing for notifying the second device of the existence of the first device unless it is confirmed that the second device is one that was paired with the first device, and this pairing is effective.

In the example shown in FIG. 5, when the PC 200a has confirmed the existence of the digital camera 100 serving as the device of a desired type, the PC 200a inquires of the server 200b whether or not pairing between the digital camera 100 and the PC 200a is effective. When it is determined that the digital camera 100 is registered in the same user account as that of the PC 200a, it is determined that they were paired with each other and the pairing is effective, and the PC 200a advertises its existence to the digital camera 100. Note that, even when the device is one that was paired with the PC 200a, there may be a case where the pairing is cancelled in the procedure of the server 200b, so it is necessary to let the server 200b that manages pairing check the current situation.

In the present embodiment, processing until it is determined whether or not pairing between the digital camera 100 and the PC 200a is effective is realized by any one of two sequences. The first one is the sequence shown in steps S502 to S507 starting with the advertisement processing of the digital camera 100, and the second one is the sequence shown in steps S508 to S514 starting with the search processing of the PC 200a.

First, the sequence starting with the advertisement processing of the digital camera 100 will be described.

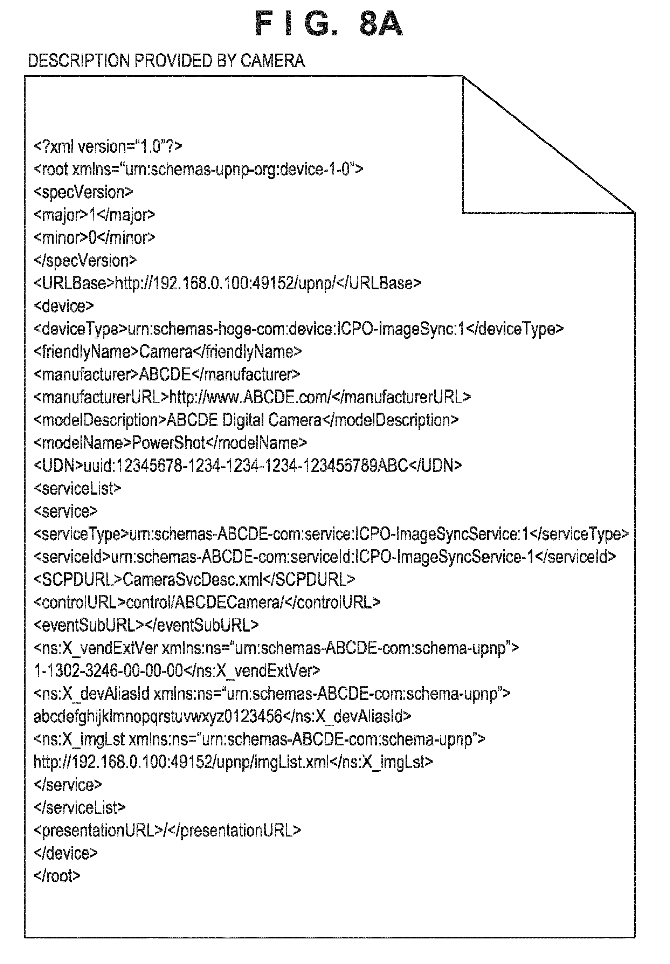

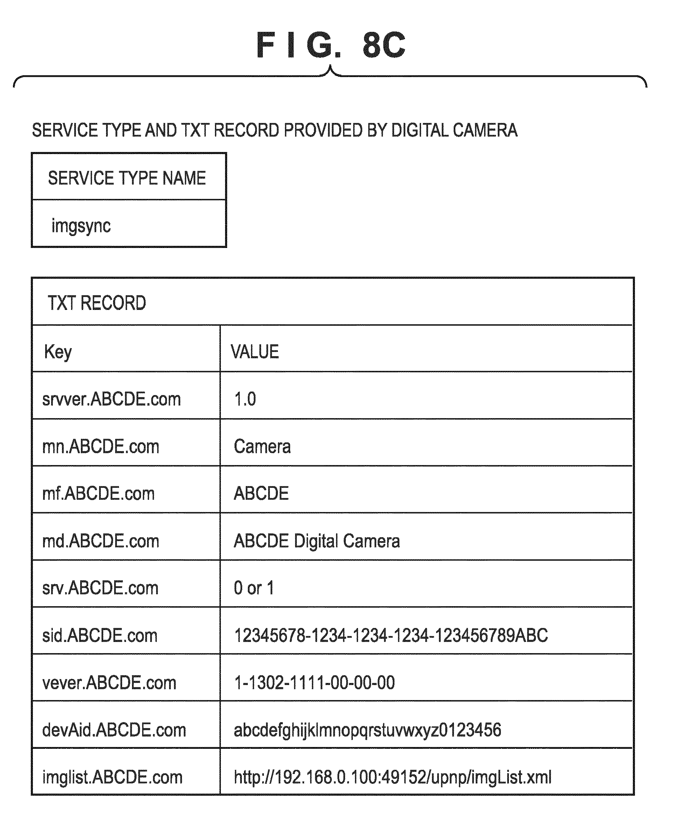

In step S502, the control unit 101 of the digital camera 100 executes StartAdvertisement, which is advertisement processing, and multicasts the existence of the digital camera 100 to devices on the LAN. In the case where the discovery protocol is UPnP, the control unit 101 multicasts an SSDP:Alive message shown in FIG. 8A in which a device type of the DeviceType tag and a service type of the ServiceType tag are designated. While, in the case where the discovery protocol is Bonjour, the control unit 101 multicasts an Multicast DNS:Notify message in which ServiceType shown in FIG. 8C is designated.

Note that "SSDP (Simple Service Discovery Protocol)" is a well-known protocol for searching for and discovering devices on a network that support UPnP. "Multicast DNS" is a well-known protocol for searching for and discovering devices on a network that support Bonjour.

In step S503, devices (including the PC 200a) that are connected to the LAN to which the digital camera 100 is connected are notified of the existence of the digital camera 100.

In step S504, the CPU 203 of the PC 200a receives an advertisement message of the digital camera 100 (SSDP:Alive or Multicast DNS:Notify). Then, the CPU 203 determines based on information included in the advertisement message whether or not the digital camera 100 is a device that the CPU 203 searches for. Specifically, the CPU 203 transmits, in step S504, a device information obtainment request (GetDescription) when having determined, based on the device type and the service type included in the advertisement message, that the digital camera 100 is a device that is searched for. More specifically, the CPU 203 executes "HTTP GET" to request Description in the case where the discovery protocol is UPnP, and requests a TXT record in the case where the discovery protocol is Bonjour.

Then, in step S505, the control unit 101 of the digital camera 100 transmits its device information to the PC 200a in response to the obtainment request. FIG. 8A shows an example of the device information (Description) that is transmitted in step S505 in the case where the discovery protocol is UPnP. Furthermore, the lower part of FIG. 8C shows an example of the TXT record that is transmitted in step S505 in the case where the discovery protocol is Bonjour. As is clear from FIGS. 8A and 8C, the control unit 101 adds the Camera Alias ID of the digital camera 100 to ns:X_devAliasID or devAid.ABCDE.com of the device information.

Then, in step S506, the CPU 203 of the PC 200a inquires of the server 200b whether or not pairing between the digital camera 100 and the PC 200a is effective (whether or not they have an effective pairing setting or whether or not the pairing setting is effective). Specifically, the CPU 203 transmits an inquiry (GetPairingInfo) to the server 200b based on the specific information (Camera Alias ID) obtained from the digital camera 100. Note that other specific information may be used as the device information.

In step S507, the CPU 203 of the server 200b checks whether or not there is a camera-server pairing setting (FIG. 4A) that includes the received device specific information (Camera Alias ID) in the secondary storage 205. If the Camera Alias ID is associated with the same user account as that of the PC 200a, the CPU 203 of the server 200b determines that the digital camera 100 is a digital camera that was effectively paired with the PC 200a. On the other hand, if the pairing setting does not include the Camera Alias ID or if the Camera Alias ID is associated with a user account different from that of the PC 200a, the CPU 203 of the server 200b determines that the digital camera 100 is not a digital camera that was effectively paired with the PC 200a. Then, the CPU 203 of the server 200b transmits the determination result (Result) to the PC 200a.

This is the sequence starting with the advertisement processing of the digital camera 100.

Hereinafter, the sequence starting with the search processing of the PC 200a will be described.

In step S508, the CPU 203 of the PC 200a multicasts, to the network to which the PC 200a is connected, a search message (StartSearch) for inquiring whether or not a specific type of device is connected. Specifically, in the case where the discovery protocol is UPnP, the CPU 203 of the PC 200a starts SSDP M-Search. "M-Search" refers to a method for detecting a UPnP-compliant device on a network, and the CPU 203 multicasts the search message in which the device type of the DeviceType tag and the service type of the ServiceType tag that are shown in FIG. 8A are designated. On the other hand, in the case where the discovery protocol is Bonjour, the CPU 203 of the PC 200a multicasts MulticastDNS:Query in which ServiceType (in the upper stage of FIG. 8C) that is searched for is designated.

In step S509, devices (including the digital camera 100) that are connected to the LAN to which the PC 200a is connected are notified of the search message.

Then, in step S510, the control unit 101 of the digital camera 100 determines whether or not the device type and the service type of the digital camera 100 match those designated in the received search message. If it is determined that they match each other, the control unit 101 transmits a response (Search Response) to the PC 200a.

Steps S511 to S514 are the same as steps S504 to S507, and thus descriptions thereof are omitted. This is the sequence starting with the search processing of the PC 200a.

If the determination result in step S507 or S514 showing that the digital camera 100 is a device that was set to effectively be paired with the PC 200a is obtained from the server 200b, the sequence from steps S515 or S519 onward is executed. Furthermore, the CPU 203 of the PC 200a adds, to the device information, the Alias ID of the device that is determined to effectively be paired with the PC 200a. On the other hand, if the determination result in step S507 or S514 showing that the digital camera 100 is not a device that was set to be effectively paired with the PC 200a is obtained from the server 200b, the sequence from step S515 or S519 onward is not executed.

The processing until the digital camera 100 determines that the PC 200a is a PC that was effectively paired with the digital camera 100 and launches an HTTP server is also realized by any one of two sequences. The first one is the sequence shown in steps S515 to S518 starting with the advertisement processing of the PC 200a, and the second one is the sequence shown in steps S519 to S523 starting with the search processing of the digital camera 100.

First, the sequence starting with the advertisement processing of the PC 200a will be described.

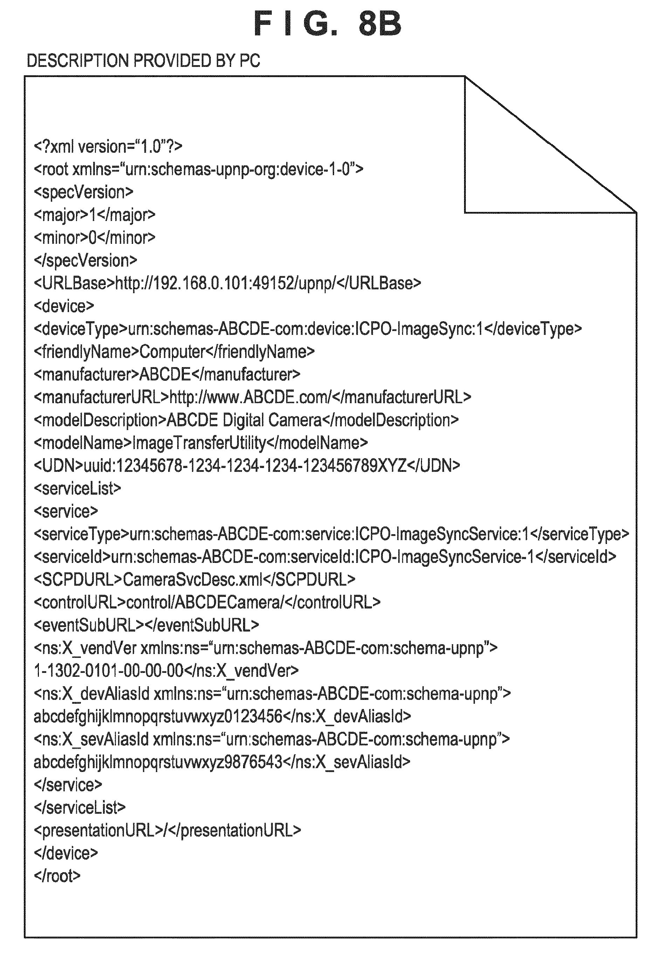

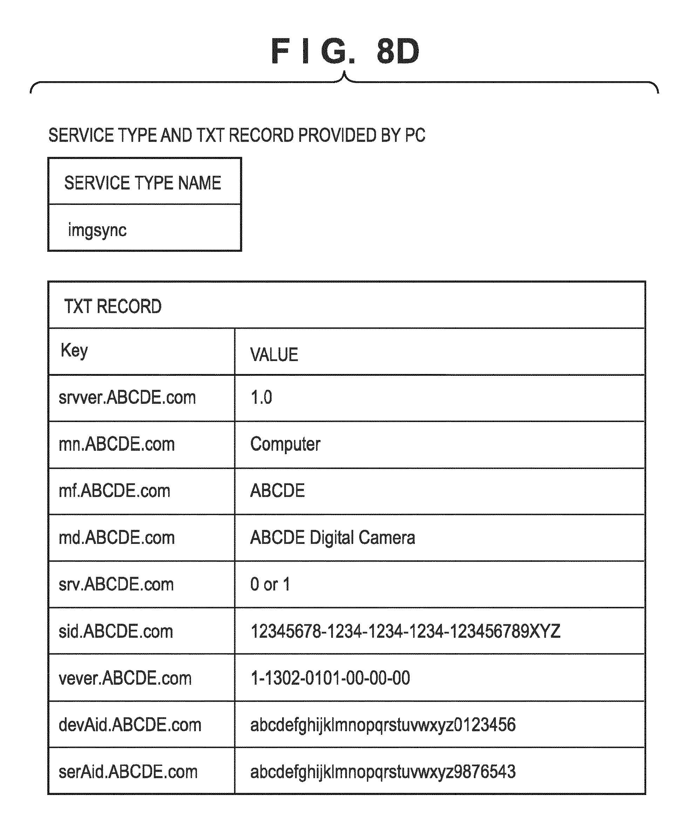

In step S515, the CPU 203 of the PC 200a multicasts the advertisement message (StartAdvertisement) and notifies devices on the LAN of the existence of the PC 200a. In the case where the discovery protocol is UPnP, the CPU 203 of the PC 200a multicasts an SSDP:Alive message in which the device type of the DeviceType tag and the service type of the ServiceType tag that are shown in FIG. 8B are designated. On the other hand, in the case where the discovery protocol is Bonjour, the CPU 203 of the PC 200a multicasts a Multicast DNS:Notify message in which the ServiceType shown in the upper stage of FIG. 8D is designated.

In step S516, the devices (including the digital camera 100) that are connected to the LAN to which the PC 200a is connected are notified of the existence of the PC 200a.

Next, in step S517, upon receipt of the advertisement message from the PC 200a, the control unit 101 of the digital camera 100 transmits a device information obtainment request (Get_Description) to the PC 200a. Specifically, the control unit 101 executes "HTTP GET" to request Description in the case where the discovery protocol is UPnP, and requests a TXT record in the case where the discovery protocol is Bonjour.

Then, in step S518, the CPU 203 of the PC 200a transmits its device information to the digital camera 100 in response to the obtainment request. FIG. 8B shows an example of the device information (Description) that is transmitted in step S518 in the case where the discovery protocol is UPnP. Furthermore, the lower stage of FIG. 8D shows an example of the TXT record that is transmitted in step S518 in the case where the discovery protocol is Bonjour. As is clear from FIGS. 8B and 8D, the CPU 203 of the PC 200a adds the Device Alias ID of the device having an effective pairing setting to ns:X_devAliasID or devAid.ABCDE.com of the device information. Here, the Alias ID of the digital camera 100 is added. The Device Alias ID of the PC 200a is included in the ns:X_sevAliasID or sevAid.ABCDE.com of the device information. This is the sequence starting with the advertisement processing of the PC 200a.

Hereinafter, the sequence starting with the search processing of the digital camera 100 will be described.

In step S519, the control unit 101 of the digital camera 100 multicasts, to the network to which the digital camera 100 is connected, a search message (StartSearch) for inquiring whether or not a specific type of device is connected. Specifically, in the case where the discovery protocol is UPnP, the control unit 101 multicasts an M-Search message in which device type of the DeviceType tag and the service type of the ServiceType tag that are shown in FIG. 8B are designated. On the other hand, in the case where the discovery protocol is Bonjour, the control unit 101 multicasts a MulticastDNS:Query in which ServiceType (in the upper stage of FIG. 8D) that is searched for is designated.

In step S520, the devices (including the PC 200a) that are connected to the LAN to which the digital camera 100 is connected are notified of the search message.

In step S521, the CPU 203 of the PC 200a determines whether or not the device type and the service type of the PC 200a match those designated in the received search message, and if they match each other, the CPU 203 transmits a response (Search Response) to the digital camera 100.

Steps S522 to S523 are the same as steps S517 to S518, and thus descriptions thereof are omitted. This is the sequence starting with the search processing of the digital camera 100.

In step S518 or S523, if the control unit 101 of the digital camera 100 could obtain device information from the device that is searched for, the sequence from steps S524 onward is executed. On the other hand, in step S518 or S523, if the control unit 101 of the digital camera 100 could not obtain device information from the device that is searched for, the sequence from steps S524 onward is not executed.

In step S524, the control unit 101 of the digital camera 100 confirms whether or not the Device Alias ID of the digital camera 100 is included in the device information (Description) obtained in step S518 or S523. Specifically, in the case where the discovery protocol is UPnP, the control unit 101 determines whether or not Device Alias ID described in the ns:X_devAliasId tag of FIG. 8B matches the Device Alias ID of the digital camera 100. Furthermore, in the case where the discovery protocol is Bonjour, the control unit 101 references the Device Alias ID described in Key of the devAid.ABCDE.com of FIG. 8D, and determines whether or not it matches the Device Alias ID of the digital camera 100.

If it is determined that they match each other, the control unit 101 determines that the PC 200a is a PC that was effectively paired with the digital camera 100, and executes the HTTP server function. Then, the control unit 101 prepares to receive a request from the PC 200a operating as the HTTP client, and creates a list of image files that can be provided, for example. This list can be created in, for example, the Extensible Markup Language (XML).

Note that, in another embodiment, the determination of the control unit 101 as to whether or not the Device Alias ID of the digital camera 100 is included in the device information (Description or TXT record) received from the PC 200a may be omitted. In this case, the control unit 101 may determine that the PC 200a is a PC that was effective paired with the digital camera 100 upon transmission of device information by the PC 200a in response to the request.

In step S525, the CPU 203 of the PC 200a obtains the list of image files that can be provided by the digital camera 100. Specifically, the CPU 203 of the PC 200a executes, as a HTTP client, an HTTP Get method (GetImageList) on the digital camera 100 serving as an HTTP server. The location of the list is described as a Uniform Resource Identifier (URI) in the device information obtained in step S505 or S512. Specifically, in the case where the discovery protocol is UPnP, a URI is described in the ns:X_imgLst tag of FIG. 8A, while in the case where the discovery protocol is Bonjour, a URI is described in Key of the imglist.ABCDE.com of FIG. 8C. The CPU 203 of the PC 200a executes, on the digital camera 100, the HTTP Get method in which this URI is designated as a destination to be accessed.

In step S526, the control unit 101 of the digital camera 100 that functions as an HTTP server transmits, to the PC 200a, the list of image files that can be provided by the digital camera 100. As described above, the list is described in, for example, XML, and includes URIs of the image files that the digital camera 100 can provide.

In step S527, the CPU 203 of the PC 200a that functions as an HTTP client analyses the obtained list of image files that can be provided by the digital camera 100, and transmits an image file obtainment request to the digital camera 100. Specifically, the CPU 203 of the PC 200a executes the HTTP Get method in which URIs of the image files included in the list are designated as destinations to be accessed.

In step S528, the control unit 101 of the digital camera 100 transmits to the PC 200a the image files whose URIs are designated. The CPU 203 of the PC 200a deletes the URI of the received image file from the image file list. The CPU 203 of the PC 200a and the control unit 101 of the digital camera 100 repeat the procedures in steps S527 and S528 until the PC 200a obtains all the image files included in the list.

In step S529, when all the URIs of the image files are deleted from the image file list, the CPU 203 of the PC 200a notifies the digital camera 100 of completion of obtainment of all the image files (NotifyComplete).

In step S530, upon receipt of the notification of the completion of obtainment, the control unit 101 of the digital camera 100 ends the function of the HTTP server and disconnects the network connection (Result).

This is the operations of the digital camera 100, the PC 200a, and the server 200b in the discovery processing sequence.

### <Digital Camera Operation in Discovery Processing>

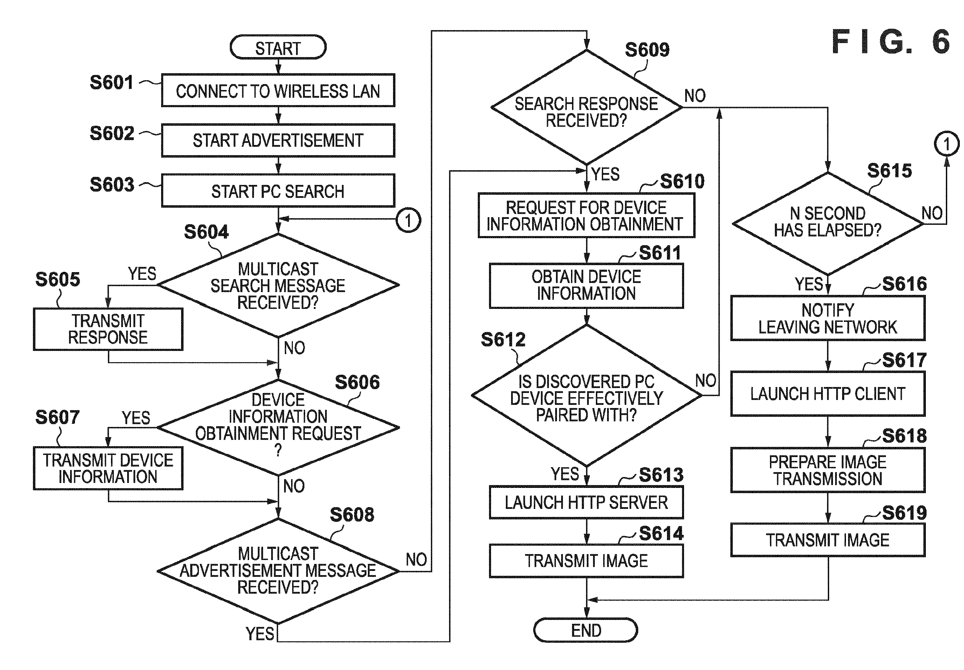

The operation of the digital camera 100 of the above-described discovery processing will be described again with reference to the flowchart shown in FIG. 6.

In step S601, the control unit 101 connects to the local area network constructed by the router 300. The step corresponds to step S501 of FIG. 5.

In step S602, the control unit 101 performs the advertisement processing. The step corresponds to step S502 of FIG. 5.

In step S603, the control unit 101 performs the search processing. The step corresponds to step S519 of FIG. 5.

In step S604, the control unit 101 determines whether or not a search message multicast by other device on the network has been received. The step corresponds to step S509 of FIG. 5. If it is determined that a search message has been received, the control unit 101 advances the procedure to step S605, otherwise to step S606.

In step S605, the control unit 101 transmits a response to the received search message to the PC 200a. The step corresponds to step S510 of FIG. 5.

In step S606, the control unit 101 of the digital camera 100 determines whether or not a device information obtainment request (the HTTP Get method described in step S511) has been received. If it is determined that a device information obtainment request has been received, the control unit 101 advances the procedure to step S607, otherwise to step S608.

In step S607, the control unit 101 transmits the required device information to the PC 200a. The step corresponds to step S505 of FIG. 5.

In step S608, the control unit 101 determines whether or not a multicast advertisement message has been received from the PC 200a. The step corresponds to step S516 of FIG. 5. If it is determined that a multicast advertisement message has been received from the PC 200a, the control unit 101 advances the procedure to step S610, otherwise to step S609.

In step S609, the control unit 101 determines whether or not a response to a multicast search message transmitted in step S603 has been received from the PC 200a, and if it is determined that the response has been received, the control unit 101 advances the procedure to step S610, otherwise to step S615.

In step S610, the control unit 101 transmits a device information obtainment request to the PC 200a. The step corresponds to steps S517 and S522 of FIG. 5.

In step S611, the control unit 101 receives the device information on the PC 200a transmitted in step S518 or S523.

In step S612, the control unit 101 determines whether or not the PC 200a is a device that was effectively paired with the digital camera 100. The step corresponds to step S524 of FIG. 5. If it is determined that the PC 200a is a device that was effectively paired with the digital camera 100, the control unit 101 advances the procedure to step S613, otherwise to step S615.

In step S613, the control unit 101 enables the HTTP server function. The step corresponds to step S524 of FIG. 5. Note that the present embodiment describes the aspect in which it is determined that the PC 200a is a device that was effectively paired with the digital camera 100 and then the HTTP server function is enabled. However, if the request is transmitted from the HTTP client (PC 200a) before completion of enabling the HTTP server function, there is a risk that the response may fail. Therefore, it is also possible to enable the HTTP server function at the time at which connection to the LAN has been established in step S601.

In step S614, the control unit 101 transmits a list of image files and the image files in response to the request from the PC 200a. The step corresponds to steps S525 to S530 of FIG. 5.

In step S615, the control unit 101 determines whether or not N seconds have elapsed after the start of the discovery processing. The control unit 101 has set a discovery execution period in advance, and repeats the procedures in steps S604 to S614 during the execution period, in order thereby to search for a PC that was effectively paired with the digital camera 100 on the network to which the digital camera 100 is connected. If no PC that was effectively paired with the digital camera 100 could be discovered within the set execution period (in case of timeout), the control unit 101 advances the procedure to step S616.

In step S616, the control unit 101 multicasts, to the connected network, a discovery protocol message for leaving the network. Specifically, the control unit 101 multicasts "SSDP:Byebye" in the case where the discovery protocol is UPnP, and multicasts "Multicast DNS:goodbye" in the case where the discovery protocol is Bonjour.

In step S617, the control unit 101 enables the HTTP client function in order to transfer the image files via a server, instead of using direct transfer to the PC (PC 200a) that was effectively paired with the digital camera 100. Note that, if the HTTP server function has been enabled at that time, it is also possible to end the HTTP server function before enabling the HTTP client function.

In step S618, the control unit 101 prepares to transmit images to the server 200b. Specifically, the control unit 101 transmits, to the server 200b, information on the image files to be transmitted to the server 200b (the total number of files, the image file name, the file size, and the like).

In step S619, the control unit 101 executes an HTTP Post method on the server 200b serving as the HTTP server, and transmits the image file to the server 200b.

This is the operation of the digital camera 100 in the discovery processing according to the present embodiment.

### <PC Operation in Discovery Processing>

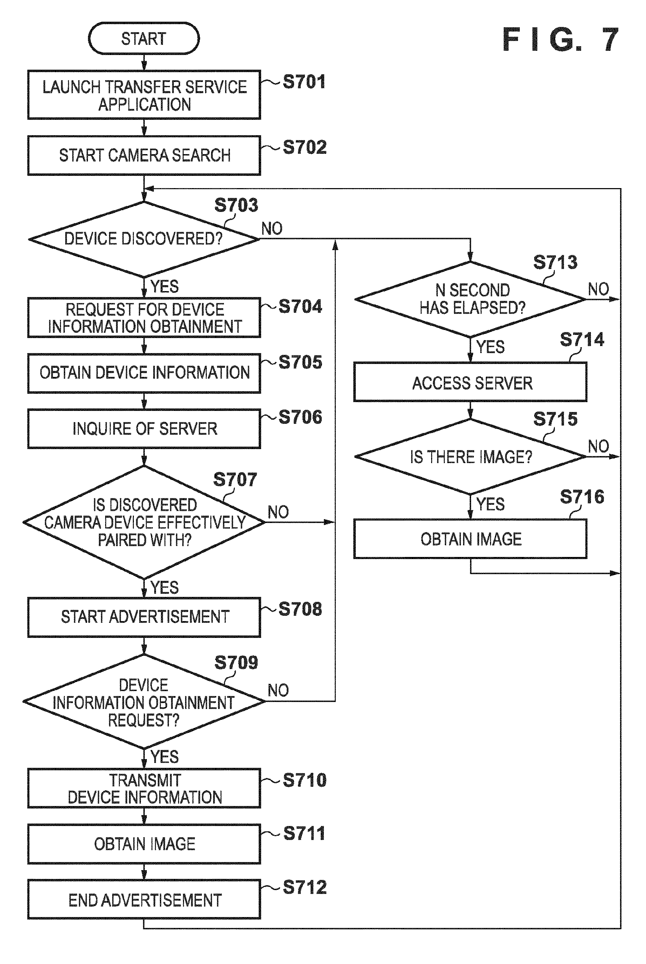

The operation of the PC 200a in the above-described discovery processing will be described again with reference to the flowchart shown in FIG. 7.

In step S701, the CPU 203 of the PC 200a loads the transfer service application onto the primary storage 204 from the secondary storage 205, and launches the transfer service application.

In step S702, the CPU 203 of the PC 200a executes the search processing. The step corresponds to step S508 of FIG. 5.

In step S703, the CPU 203 of the PC 200a determines whether or not a camera has been discovered. The CPU 203 of the PC 200a determines that a camera has been discovered if the multicast advertisement message explained in step S502 has been received from the digital camera 100 or if a response to the multicast search message transmitted in step S702 has been received. The CPU 203 of the PC 200a advances the procedure to step S704 if it is determined that a camera has been discovered, otherwise to step S713.

In step S704, the CPU 203 of the PC 200a transmits a device information obtainment request (Get_Description) to the discovered device. The step corresponds to step S504 or S511 of FIG. 5.

In step S705, the CPU 203 of the PC 200a obtains, from the discovered camera, the device information transmitted in step S505 or S512.

In step S706, the CPU 203 of the PC 200a inquires of the server 200b whether the discovered camera is a device that was effectively paired with the PC 200a. The step corresponds to step S506 or S513 of FIG. 5.

In step S707, the CPU 203 of the PC 200a determines, based on the determination result transmitted from the server 200b in step S507 or S514, whether or not the discovered camera is a device that was effectively paired with the PC 200a. If it is determined that the discovered camera is a device that was effectively paired with the PC 200a, the CPU 203 of the PC 200a advances the procedure to step S708, otherwise to step S713.

In step S708, the CPU 203 of the PC 200a starts the advertisement processing. The step corresponds to step S515 of FIG. 5.

In step S709, the CPU 203 of the PC 200a determines whether or not a device information obtainment request is given from the digital camera 100. If it is determined that a device information obtainment request has been given, the procedure advances to step S710, otherwise to step S713.

In step S710, the CPU 203 of the PC 200a transmits device information on the PC 200a to the digital camera 100. The step corresponds to step S518 or S523 of FIG. 5.

In step S711, the CPU 203 of the PC 200a obtains a list of image files and the image files from the digital camera 100. The step corresponds to steps S525 to S530 of FIG. 5.

In step S712, the CPU 203 of the PC 200a obtains all the image files from the digital camera 100, and then multicasts, to the connected network, a discovery protocol message for leaving the network. Specifically, the CPU 203 of the PC 200a multicasts "SSDP:Byebye" in the case where the discovery protocol is UPnP, and multicasts "MulticastDNS:goodbye" in the case where the discovery protocol is Bonjour. With this multicast, the CPU 203 of the PC 200a ends the advertisement processing and then returns the procedure to step S703, where the search processing is repeated.

On the other hand, in step S713, the CPU 203 of the PC 200a determines whether or not N seconds have elapsed after the start of the discovery. The PC 200a has set a discovery execution period in advance, and repeats the procedures in steps S703 to S712 during the execution period, in order thereby to search for a device (camera) that was effectively paired with the PC 200a on the LAN to which the PC 200a is connected. If no device that was effectively paired with has been discovered within the set execution period, the CPU 203 of the PC 200a advances the procedure to step S714 in order to obtain the image files from the server 200b.

In step S714, the CPU 203 of the PC 200a accesses the server 200b, and confirms whether or not the image file to be obtained is stored in the server 200b. In the server 200b, a list of image files to be received by the PC 200a is created, and the PC 200a executes, as the HTTP client, the HTTP Get method, and obtains the list from the server 200b serving as the HTTP server. The format of the list is not particularly limited, but an XML format list in which URIs of the image files are described, similar to one that is provided by the digital camera 100, may be used.

In step S715, the CPU 203 of the PC 200a analyses the list obtained in step S714, and determines whether or not there is an image file to be obtained. For example, the CPU 203 of the PC 200a determines that there is an image file to be obtained if an URI of an image file is described in the obtained list, and advances the procedure to step S716, and otherwise the CPU 203 returns the procedure to step S703.

In step S716, the CPU 203 of the PC 200a executes, on the server 200b, the HTTP Get method in which URIs of image files included in the list are designated as destination addresses to be accessed, and obtains the image files from the server 200b. The CPU 203 of the PC 200a repeats the procedures until all the image files whose URIs are described in the list are obtained.

This is the operation of the PC 200a in the discovery processing according to the present embodiment.

As described above, according to the present embodiment, if one device has discovered another device of the search target type (device having a specific service) on the network to which the one device is connected, the one device determines in the discovery processing whether or not to communicate with the other device. Therefore, it is possible to early perform the determination whether or not to communicate with the discovered device, and thus to effectively search for the device to communicate with.

### Second Embodiment

The first embodiment has described the aspect in which the PC 200a inquires the server 200b whether or not pairing between the digital camera 100 and the PC 200a is effective, but the present embodiment will describe an aspect in which the digital camera 100 inquires whether or not the pairing is effective.

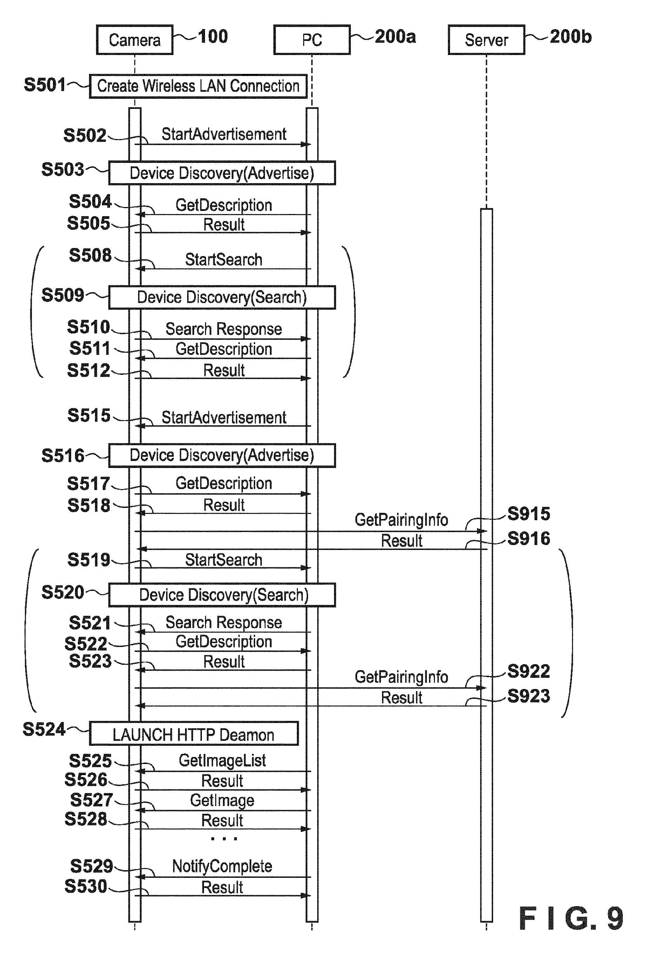

FIG. 9 is an operational sequence diagram of the digital camera 100, the PC 200a, and the server 200b in discovery processing of the present embodiment. In FIG. 9, the same reference numerals are given to the same operations as those in the FIG. 5, and descriptions thereof are omitted.

In step S915, the control unit 101 of the digital camera 100 inquires of the server 200b whether pairing between the digital camera 100 and the PC 200a is effective (whether or not they have an effective pairing setting or whether or not the pairing setting is effective). Specifically, the control unit 101 transmits an inquiry (GetPairingInfo) to the server 200b based on the specific information (Device Alias ID) obtained from the PC 200a. Note that other specific information may be used as the device information. Specifically, the control unit 101 transmits the Device Alias ID of the PC 200a that is described in the ns:X_sevAliasId tag of FIG. 8B in the case where the discovery protocol is UPnP, and the Device Alias ID of the PC 200a that is described in Key of the serAid.ABCDE.com of FIG. 8D in the case where the discovery protocol is Bonjour.

In step S916, the CPU 203 of the server 200b checks the secondary storage 205 as to whether or not there is a PC-server pairing setting (FIG. 4B) including received device specific information (Device Alias ID). Here, if the Device Alias ID is associated with the same user account as that of the digital camera 100, the CPU 203 of the server 200b determines that the PC 200a is a PC that was effectively paired with the digital camera 100. Furthermore, if there is no Device Alias ID in the pairing setting, or if the PC 200a is associated with a user account different from that of the digital camera 100, the CPU 203 of the server 200b determines that pairing with the digital camera 100 is not effective. Then, the CPU 203 of the server 200b transmits the determination result (Result) to the digital camera 100.

Since procedures in steps S922 and S923 are the same as those in steps S915 and S916, descriptions thereof are omitted.

This is the operation of the digital camera 100 in the discovery processing of the present embodiment.

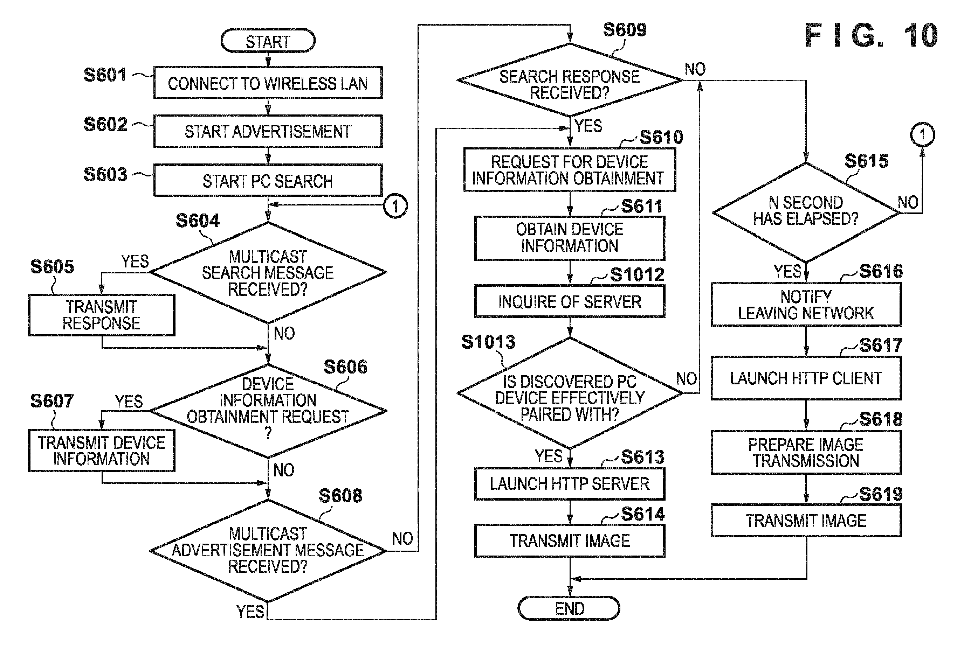

FIG. 10 is a flowchart illustrating procedures of the digital camera 100 in the sequence chart of FIG. 9. In FIG. 10, the same reference numerals are given to the same operations as those in FIG. 6, and descriptions thereof are omitted.

In step S1012, the control unit 101 of the digital camera 100 inquires of the server 200b whether or not pairing between the digital camera 100 and the PC 200a is effective (whether or not they have an effective pairing setting or whether or not the pairing setting is effective). The step corresponds to step S915 of FIG. 9.

In step S1013, the control unit 101 of the digital camera 100 determines, based on the determination result returned from the server 200b as a response to the inquiry of step S1012, whether or not PC 200a is a device that was effectively paired with the digital camera 100. If it is determined that the PC 200a is a device that was effectively paired with the digital camera 100, the control unit 101 advances the procedure to step S1014, otherwise to step S615.

Note that, if in step S615 no PC that was effectively paired with the digital camera 100 has been discovered even after N seconds have elapsed from the start of the discovery processing, and if it is decided to transmit an image file to the server 200b, the control unit 101 may display the result of the discovery processing on the display unit 130. For example, the control unit 101 displays on the display unit 130 a message indicating that a search target device (having a specific service) has been discovered, but is a device that was not effectively paired with the digital camera 100. Furthermore, if no search target device was discovered during the search period, the control unit 101 displays on the display unit 130 a message indicating running out of time.

This is the operation of the digital camera 100 in the discovery processing of the present embodiment.

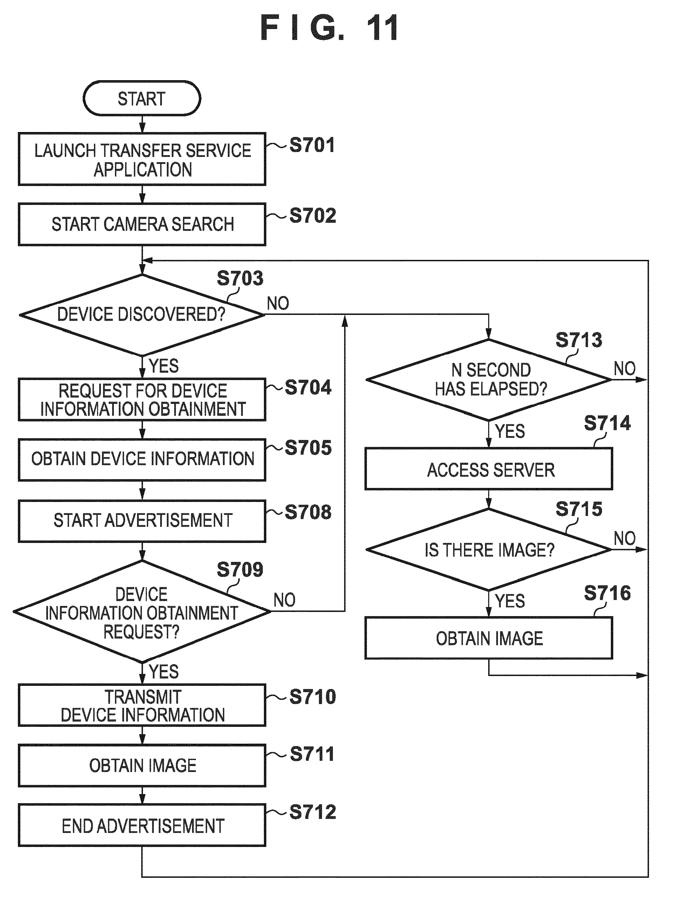

FIG. 11 is a flowchart showing an operation of the PC 200a in the discovery processing of the present embodiment, and the same reference numerals are given to the same operations as those in FIG. 7, and descriptions thereof are omitted.

Accordingly, also in the present embodiment, the same effects as in the first embodiment can be realized.

### Other Embodiments

In the foregoing embodiments, the digital camera 100 operates as an HTTP server if there is the PC 200a that is effectively paired with the digital camera 100 on the connected LAN, while operates as an HTTP client if there is not the PC 200a that was effectively paired with the digital camera 100 on the connected LAN, but on the other hand, the PC 200a always operates as an HTTP client. However, it is also possible that the digital camera 100 always operates as an HTTP client, and the PC 200a operates as an HTTP server if there is the digital camera 100 that is effectively paired with the PC 200a on the connected network, while operates as an HTTP client if there is not the digital camera 100 that is effectively paired with the PC 200a on the connected network.

Furthermore, the foregoing embodiments have described taking connection between the digital camera and the PC as an example, but the types of the devices are not necessarily limited. An output device such as a printer, a mobile terminal such as a smartphone or a tablet may be used.

Furthermore, the foregoing embodiments have described taking the digital camera 100 having the wireless communication function as an example, but a configuration is also possible in which a recording medium capable of wireless communication is installed in the digital camera 100, and controls wireless communication as the recording medium 141. Also in this case, the same control as in the foregoing embodiments is performed on a wireless circuit unit of the recording medium capable of wireless communication.

Furthermore, the present invention is applicable also to a system in which the digital camera 100 is remotely controlled by a PC or the like. In this case, a control unit of the PC gives various types of inquiries and requests for control with respect to the control unit 101 of the digital camera 100, thereby making it possible to realize the remote control.

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

The present invention relates to a method for discovering a device to communicate with among communication devices on a network. If a first device (100) is discovered on a first network, it is inquired of a device (200b) on a second network whether or not the discovered first device is a device having an effective association with that device. As the result of the inquiry, if it is determined that the discovered first device is a device having an effective association with that device, data is obtained from the discovered first device (100). On the other hand, if it is determined that the discovered first device is not the device having an effective association with that device, the data is not obtained from the discovered first device.

## Claims

1. An information processing apparatus (200a) capable of communicating with a device (100) on a first network (LAN), and a device (200b) on a second network (WAN) that is different from the first network, comprising:
inquiring means (200a;S506,S513) for inquiring of the device (200b) on the second network, if a first device (100) is discovered on the first network, whether or not the discovered first device (100) is a device that has an effective association with the information processing apparatus (200a); and
communication means (200a,S525) that obtains data from the discovered first device (100), if a result of the inquiry shows that the discovered first device (100) is a device having an effective association with the information processing apparatus (200a), and that does not obtain data from the discovered first device (100) if the result of the inquiry shows that the discovered first device (100) is not the device having an effective association with the information processing apparatus (200a).

2. The information processing apparatus according to claim 1,
wherein the inquiring means (200a,S504,S511) obtains device information from the discovered first device (100), and performs the inquiry, to the device (200b) on the second network, using information specific to the discovered first device (100) that is included in the device information.

3. The information processing apparatus according to claim 1,
wherein the inquiring means determines that the first device is discovered, when receiving an advertisement message transmitted by the first device on the first network, or receiving a response to a transmitted search message for searching for the first device on the first network.

4. The information processing apparatus according to any one of claims 1 to 3,
wherein, if it is determined that the discovered device is not the device having an effective association with the information processing apparatus, the communication means does not transmit, to the first network, an advertisement message of the information processing apparatus.

5. The information processing apparatus according to any one of claims 1 to 4,
wherein, if the first device is not discovered on the first network, the communication means obtains, from the device on the second network, data that is transmitted to the device on the second network from the first device.

6. The information processing apparatus according to claim 1 or 2, further comprising imaging means (110).

7. The information processing apparatus according to claim 6,
wherein the inquiring means determines that the first device is discovered, when receiving a response from the first device to the advertisement message transmitted by the information processing apparatus on the first network, or receiving a search message transmitted by the first device on the first network.

8. The information processing apparatus according to claim 6 or 7,
wherein, if it is determined that the discovered first device is not the device having an effective association with the information processing apparatus, the communication means does not respond to a request from the first device.

9. The information processing apparatus according to any one of claims 1 to 8,
wherein the first network is a local area network and the second network is a wide area network.

10. The information processing apparatus according to any one of claims 1 to 8,
wherein the first network is a wireless LAN network and the second network is an internet.

11. A method for controlling an information processing apparatus (200a) capable of communicating with a device (100) on a first network (LAN), and a device (200b) on a second network (WAN) that is different from the first network, the method comprising the steps of:
inquiring (S506,S513) of the device (200b) on the second network, if a first device (100) is discovered on the first network, whether or not the discovered first device (100) is a device that has an effective association with the information processing apparatus (200a); and
obtaining (S525) data from the discovered first device (100), if a result of the inquiry shows that the discovered first device (100) is a device having an effective association with the information processing apparatus (200a),
wherein if the result of the inquiry shows that the discovered first device (100) is not the device having an effective association with the information processing apparatus, the data is not obtained from the discovered first device (100).

12. A computer program that causes a computer to function as the information processing apparatus according to any one of claims 1 to 10.
